# EUROPÄISCHE PATENTANMELDUNG

(11) **EP 1 328 127 A1**
(43) Veröffentlichungstag der Anmeldung: **16.07.2003**
(21) Anmeldenummer: 02000171.5
(22) Anmeldetag: 09.01.2002
(51) Int. Cl.: H04N 7/58, H04N 7/24

(54) **Simultaneinspeisung und Synchronisation von Audio und Videodaten**

(71) Anmelder: Beta Research GmbH, 85774 Unterföhring (DE)
(72) Erfinder: Proske, Wolfram, 84424 Isen (DE)
(74) Vertreter: Heselberger, Johannes

(57) **Zusammenfassung**

Vorrichtung zum Übertragen digitaler Filmbilddaten auf einem Transportkanal (30), mit
- einem ersten Quellenanschluß (8) für eine erste Filmbildquelle zum Bereitstellen einer ersten Abfolge von Filmbildern,
- wenigstens einem zweiten Quellenanschluß (9, 10) für eine zweite Filmbildquelle zum Bereitstellen einer zweiten Abfolge von Filmbildern, die zumindest einen Abschnitt zeitlicher Überschneidung mit der ersten Abfolge von Filmbildern aufweist,
- einer Filmbildverarbeitungseinrichtung (12), die mit dem ersten Quellenanschluß (8) und dem zweiten Quellenanschluß (9, 10) verbunden ist und die zum Einfügen der Filmbilder der ersten Abfolge sowie der Filmbilder der zweiten Abfolge in einen Datentransportstrom derart ausgebildet ist, dass sie einen ersten Elementardatenstrom mit den Filmbildern der ersten Abfolge und einen zweiten Elementardatenstrom mit den Filmbildern der zweiten Abfolge erstellt und die Elementardatenströme in denselben Datentransportstrom einfügt, und
- einer Sendeeinrichtung, die mit der Filmbildverarbeitungseinrichtung verbunden ist und die zum Senden des Datentransportstroms auf dem Transportkanal vorgesehen ist,
wobei die Filmbildverarbeitungseinrichtung (12) Referenzen erstellt, anhand derer in Abschnitten der Abfolgen von Filmbildern, in denen sich die Abfolgen zeitlich überschneiden, die Filmbilder der zweiten Abfolge jenen der ersten Abfolge zugeordnet werden können.

Ferner betrifft die Erfindung ein Verfahren zur Übertragung digitaler Filmbilddaten auf einem Transportkanal und ein Verfahren zur Inanspruchnahme eines Dienstes, der mit einem Datentransportstrom auf einem Transportkanal übertragen wird.

## Beschreibung

Die Erfindung betrifft eine Vorrichtung zum Übertragen digitaler Filmbilddaten auf einem Transportkanal, mit einem ersten Quellenanschluß für eine erste Filmbildquelle zum Bereitstellen einer ersten Abfolge von Filmbildern, wenigstens einem zweiten Quellenanschluß für eine zweite Filmbildquelle zum Bereitstellen einer zweiten Abfolge von Filmbildern, die zumindest einen Abschnitt zeitlicher Überschneidung mit der ersten Abfolge von Filmbildern aufweist, einer Filmbildverarbeitungseinrichtung, die mit dem ersten Quellenanschluß und dem zweiten Quellenanschluß verbunden ist und die zum Einfügen der Filmbilder der ersten Abfolge sowie der Filmbilder der zweiten Abfolge in einen Datentransportstrom derart ausgebildet ist, dass sie einen ersten Elementardatenstrom mit den Filmbildern der ersten Abfolge und einen zweiten Elementardatenstrom mit den Filmbildern der zweiten Abfolge erstellt und die Elementardatenströme in denselben Datentransportstrom einfügt, und einer Sendeeinrichtung, die mit der Filmbildverarbeitungseinrichtung verbunden ist und die zum Senden des Datentransportstroms auf dem Transportkanal vorgesehen ist.

Ferner betrifft die Erfindung eine Vorrichtung zur Inanspruchnahme eines Dienstes, der mit einem Datentransportstrom auf einem Transportkanal übertragen wird, mit einer Empfangseinrichtung zum Empfangen des Datentransportstroms auf dem Transportkanal, einer Transportstromdatenverarbeitungseinrichtung, die mit der Empfangseinrichtung verbunden ist und die zum Verarbeiten des empfangenen Datentransportstroms zu einer Sequenz von Wiedergabebildern des Dienstes ausgebildet ist, und einer mit der Transportstromdatenverarbeitungseinrichtung verbundenen Anschlusseinrichtung zum Anschluss einer Wiedergabeeinrichtung für die Sequenz von Wiedergabebildern.

Ferner betrifft die Erfindung ein Verfahren zur Übertragung digitaler Filmbilddaten auf einem Transportkanal sowie ein Verfahren zur Inanspruchnahme eines Dienstes, der mit einem Datentransportstrom auf einem Transportkanal übertragen wird.

Schließlich betrifft die Erfindung ein System zum Übertragen digitaler Filmbilddaten eines Dienstes auf einem Transportkanal zur Inanspruchnahme des Dienstes.

Aus dem Stand der Technik ist ein System zum Übertragen eines digitalen Fernsehprogrammes auf einem Kabelkanal bekannt, das eine Übertragungsstation zum Übertragen des digitalen Fernsehprogrammes auf dem Kabelkanal sowie ein digitales Fernsehgerät zum Empfang und zur Wiedergabe des digitalen Fernsehprogrammes aufweist. Es ist ferner ein Bild-im-Bild Wiedergabesystem bekannt, bei dem ein digitales Fernsehgerät zum gleichzeitigen Empfang auf mehreren Kabelkanälen ausgebildet ist und gleichzeitig auf den mehreren Kabelkanälen empfangene Fernsehprogramme auf jeweils verschiedenen zugeordneten Bildschirmabschnitten wiedergibt.

Der Erfindung liegt die Aufgabe zugrunde, das bekannte System, die bekannten Vorrichtungen sowie die bekannten Verfahren derart zu verbessern, dass die Funktionalität des Systems, der Vorrichtungen bzw. der Verfahren möglichst weitgehend erweitert und vereinfacht ist.

Die Erfindung löst die Aufgabe bei der eingangs genannten Vorrichtung zum Übertragen digitaler Filmbilddaten auf einem Transportkanal, indem die Filmbildverarbeitungseinrichtung Referenzen erstellt, anhand derer in Abschnitten der Abfolgen von Filmbildern, in denen sich die Abfolgen zeitlich überschneiden, die Filmbilder der zweiten Abfolge jenen der ersten Abfolge zugeordnet werden können.

Unter Filmbild ist jedes Mittel zu verstehen, das im Rahmen der Abfolge von Filmbildern dazu vorgesehen ist, beim Abnehmer während eines Zeitintervals einen visuellen Eindruck zu erzeugen oder zu diesem visuellen Eindruck beizutragen. Das Filmbild kann somit als analoges Signal oder als digitales Signal vorliegen. Das Filmbild kann auch bloß fragmentarisch vorliegen, wenn etwa vorgesehen ist, das Fragment mittels eines vorhergehenden Gesamtbildes zu dem aktuellen Gesamtbild zu ergänzen. Das Filmbild kann auch als Steuersignal vorliegen, mittels dessen etwa eine Lichtquelle wie z. B. ein Laser gesteuert wird. Das Filmbild kann ferner als Computerprogramm vorliegen, mittels dessen die Filmbildverarbeitungseinrichtung eine Graphik errechnet, die das Filmbild bildet. Die vorstehend genannten Ausbildungen des Filmbilds sind nicht abschließend, sondern bloß beispielhaft aufgeführt. Das Filmbild kann als Mischform der vorstehend genannten Ausbildungen vorliegen. Die Länge des Zeitintervals, in dem das aktuelle Filmbild den visuellen Eindruck erzeugt, kann eine Wahrnehmungsschwelle des Abnehmers unterschreiten, so dass sich der Abnehmer des Eindrucks nicht bewußt wird.

Mit der erfindungsgemäßen Übertragungsvorrichtung lassen sich mehrere Abfolgen von Filmbildern, die gleichzeitig ablaufen, auf einem einzigen Datentransportstrom derart übertragen, dass die Abfolgen von Filmbildern, die inhaltlich aufeinander bezogen sind, zeitlich einander besonders einfach zuordenbar sind. Bevorzugt ist die Filmbildverarbeitungsvorrichtung dazu vorgesehen, die Referenzen in den Datentransportstrom, insbesondere in jeden der Elementardatenströme einzufügen. Anhand der Referenzen in dem Datentransportstrom ist eine Zuordnung gleichzeitiger Abschnitte der Abfolgen von Filmbildern erkennbar.

Bei einer weiteren Ausführungsform fügt die Filmbildverarbeitungseinrichtung Namen der Abfolgen von Filmbilddaten jeweils in den zugeordneten Elementardatenstrom ein. Ferner fügt die Filmbildverarbeitungseinrichtung bei einer Ausführungsform eine Namensübersicht in den Datentransportstrom ein. Anhand der Namen, insbesondere anhand der Namensübersicht, ist eine gegenseitige Zuordnung der Elementardatenströme zu den mit dem jeweiligen Elementardatenstrom bertragenen Filmbildern besonders einfach erkennbar.

Vorzugsweise ist wenigstens einer der Quellenanschlüsse zum Anschluß einer digitalen Filmbildquelle vorgesehen; besonders bevorzugt ist eine Ausführungsform, bei der jeder Quellenanschluß digital ausgebildet ist. Bei dieser Ausführungsform ist ein Gesamtverarbeitungsaufwand besonders gering, da die bereitgestellten Filmbilder bereits digitalisiert und somit unmittelbar einer digitalen Verarbeitung zugänglich sind.

Eine besonders bevorzugte Ausführungsform der erfindungsgemäßen Übertragungsvorrichtung weist wenigstens einen weiteren Quellenanschluß für eine Tonspurquelle zum Bereitstellen einer Tonspur auf, die gleichzeitig zu wenigstens einer der Abfolgen von Filmbildern abläuft, wobei die Filmbildverarbeitungseinrichtung mit dem weiteren Quellenanschluß verbunden ist und wobei die Filmbildverarbeitungseinrichtung derart ausgebildet ist, dass sie einen weiteren Elementardatenstrom mit der Tonspur erstellt und diesen weiteren Elementardatenstrom in den Datentransportstrom einfügt. Bei dieser Ausführungsform ist eine volle audiovisuelle Funktionalität gewährleistet.

Bevorzugt ist die Filmbildverarbeitungseinrichtung zum Verschlüsseln wenigstens eines Elementardatenstroms ausgebildet. Bei dieser Ausführungsform kann eine Inanspruchnahme des übertragenen Dienstes auf jene Abnehmer beschränkt werden, die - insbesondere aufgrund einer entsprechenden Berechtigung - mit einem technischen Mittel zum Entschlüsseln des Elementardatenstroms ausgerüstet sind.

Die Erfindung löst die Aufgabe ferner mittels einer eingangs genannten Vorrichtung zur Inanspruchnahme eines Dienstes, bei der die Transportstromdatenverarbeitungseinrichtung zum Verarbeiten gleichzeitiger Filmbilder in dem Datentransportstrom derart ausgebildet ist, dass die Transportstromdatenverarbeitungseinrichtung zum Verarbeiten gleichzeitiger Filmbilder in dem Datentransportstrom derart ausgebildet ist, dass die Transportstromdatenverarbeitungseinrichtung die gleichzeitigen Filmbilder in dem Datentransportstrom anhand von Referenzen in dem Datentransportstrom bestimmt.

Mit der Erfindung wird eine Vorrichtung geschaffen, mittels derer mehrere Abfolgen von Filmbildern eines Dienstes, die in dem Datentransportstrom des Dienstes an die Vorrichtung übertragen sind, unter Bezugnahme aufeinander zur gleichzeitigen Betrachtung an die Wiedergabeeinrichtung bereitgestellt werden können. Die Gleichzeitigkeit der Wiedergabe der mehreren Abfolgen von Filmbildern stellt eine hohe Funktionalität dar: Beispielsweise kann ein Dienst, der eine Darbietung von Fußballspielen der Deutschen Bundesliga zum Gegenstand hat, derart in Anspruch genommen werden, dass der Abnehmer des Dienstes mehrere Fußballspiele, die zu derselben Zeit an verschiedenen Orten ausgetragen und aufgezeichnet werden, auf dem Bildschirm seines Fernsehgeräts simultan verfolgt. Auf diese Weise wird der Abnehmer während der Dauer eines einzigen Spieles vollständig über den Verlauf aller dieser Spiele informiert! Da die Transportstromdatenverarbeitungseinrichtung dazu vorgesehen ist, die gleichzeitigen Filmbilder in dem Datentransportstrom anhand von Referenzen in dem Datentransportstrom zu bestimmen, ist eine synchronisierte Wiedergabe von Abfolgen von Filmbildern möglich, die einander zeitlich zugeordnet sind, sofern die Zuordnung mittels der Referenzen in dem Datentransportstrom erfaßt ist. Beispielsweise kann ein Dienst, der eine Darbietung eines Fußballspiels zum Gegenstand hat, derart in Anspruch genommen werden, dass der Abnehmer des Dienstes das Fußballspiel aus Sicht mehrerer Kamerapositionen heraus auf dem Bildschirm seines Fernsehgeräts simultan verfolgt. Auf diese Weise wird der Abnehmer besonders umfassend über die Entwicklung dieses Fußballspiels informiert.

Bei einer Ausführungsform ist die Transportstromdatenverarbeitungseinrichtung dazu vorgesehen, mehrere gleichzeitige Filmbilder in ein einziges Wiedergabebild einzufügen. Dies hat den Vorteil, dass das einzige Wiedergabebild an ein übliches Wiedergabegerät bereitstellbar und etwa mittels eines üblichen Videoaufnahmegerätes vom Abnehmer aufzeichenbar ist.

Bei einer besonderen Ausführungsform der Vorrichtung ist die Transportstromdatenverarbeitungseinrichtung dazu vorgesehen, mehrere gleichzeitige Filmbilder für eine solche Wiedergabe zu verarbeiten, die einen räumlichen Eindruck weckt. Die Funktionalität einer Wiedergabe, die scheinbar - oder tatsächlich etwa im Falle einer holographischen Wiedergabe - in drei Dimensionen erfolgt, ist besonders vorteilhaft, weil der Abnehmer des Dienstes den räumlichen Eindruck besonders tief empfindet. Bei einer Ausführungsform erfolgt die Kombination der gleichzeitigen Bilder unter Aufgabe einer strikten Gleichzeitigkeit, indem etwa jeweils zwei "gleichzeitige" Filmbilder in zeitlichem Abstand voneinander versetzt dargestellt werden. Dabei wird beispielsweise ein erstes Wiedergabebild vollständig von einem der Filmbilder der ersten Abfolge ausgefüllt und ein zweites Wiedergabebild, das auf das erste Wiedergabebild folgt, vollständig von einem gleichzeitigen Filmbild der zweiten Abfolge ausgefüllt, worauf das dritte Wiedergabebild von einem folgenden Filmbild der ersten Abfolge ausgefüllt wird, und so fort.

Bei einer Ausführungsform weist die erfindungsgemäße Vorrichtung eine Entschlüsselungseinrichtung auf, die zwischen die Empfangseinrichtung und die Transportstromdatenverarbeitungseinrichtung geschaltet ist, und die gegebenenfalls zum Entschlüsseln des verschlüsselten Elementardatenstroms vorgesehen ist, sofern dieser in den Datentransportstrom eingefügt ist. Die Entschlüsselungseinrichtung stellt die Identität des Abnehmers fest und prüft, ob der Abnehmer zur Inanspruchnahme des Dienstes mit den Filmbildern in dem verschlüsselten Elementardatenstrom berechtigt ist. Wenn die Berechtigung gegeben ist, entschlüsselt die Entschlüsselungseinrichtung den verschlüsselten Elementardatenstrom und leitet den entschlüsselten Elementardatenstrom an die Transportstromdatenverarbeitungseinrichtung weiter. Die Entschlüsselungseinrichtung ist vorteilhaft, weil sie die Möglichkeit gibt, verschiedenen Abnehmern einen differenzierten Zugang zu demselben Dienst zu verschaffen: Beispielsweise beschränkt die Entschlüsselungseinrichtung bei einem Abnehmer, der nur zur Inanspruchnahme eines Minimaldienstes berechtigt ist, die Entschlüsselung auf jenen Elementardatenstrom, der eine Hauptabfolge von Filmbildern beinhaltet. Weitere Elementardatenströme, die eine Nebenabfolge von Filmbildern beinhalten, die sich mit der Hauptabfolge zeitlich überschneiden, werden dagegen nur bei einem Abnehmer entschlüsselt, der zur Inanspruchnahme eines umfangreicheren Dienstes berechtigt ist. Nicht entschlüsselte Filmbilder werden vorzugsweise nicht in die Wiedergabebilder eingefügt.

Bei einer Ausführungsform der Erfindung umfasst der Transportkanal, auf dem der Datentransportstrom gesendet wird, mehrere logische Übertragungskanäle, die jeweils zur Übertragung eines Elementardatenstroms dienen. Bevorzugt ist der Transportkanal, auf dem der Datentransportstrom gesendet wird, einem ersten umfassten logischen Übertragungskanal derart zugeordnet, dass die Belegung der übrigen umfassten logischen Übertragungskanäle kaschiert ist. Der erste umfasste logische Übertragungskanal ist etwa als Ankerkanal ausgebildet. Die übrigen umfassten logischen Übertragungskanäle sind als Nebenkanäle ausgebildet.

Die Erfindung löst die Aufgabe desweiteren mittels eines Verfahrens zur Übertragung digitaler Filmbilddaten auf einem Transportkanal, mit den Schritten:
- Bereitstellen einer ersten Abfolge von Filmbildern an einem ersten Quellenanschluß für eine erste Filmbildquelle;
- Bereitstellen einer zweiten Abfolge von Filmbildern an einem zweiten Quellenanschluß für eine zweite Filmbildquelle, wobei die zweite Abfolge von Filmbildern zumindest einen Abschnitt zeitlicher Überschneidung mit der ersten Abfolge von Filmbildern aufweist;
- Erstellen eines ersten Elementardatenstroms mit den Filmbildern der ersten Abfolge;
- Erstellen eines zweiten Elementardatenstroms mit den Filmbildern der zweiten Abfolge;
- Erstellen von Referenzen, anhand derer in Abschnitten der Abfolgen von Filmbildern, in denen sich die Abfolgen zeitlich überschneiden, die Filmbilder der zweiten Abfolge jenen der ersten Abfolge zugeordnet werden können,
- Einfügen des ersten Elementardatenstroms, des zweiten Elementardatenstroms sowie der Referenzen in einen Datentransportstrom; und
- Senden ein Datentransportstroms auf dem Transportkanal.

Die Aufgabe wird bei der Erfindung ferner mittels eines Verfahren zur Inanspruchnahme eines Dienstes gelöst, der mit einem Datentransportstrom auf einem Transportkanal übertragen wird, mit den Schritten:
- Empfangen des Datentransportstroms auf dem Transportkanal;
- Ermitteln von Elementardatenströmen, die in den Datentransportstrom eingefügt sind;
- Ermitteln von Referenzen, die in den Datentransportstrom, insbesondere in die ermittelten Elementardatenströme eingefügt sind;
- Verarbeiten der ermittelten Elementardatenströme zu jeweils einer Abfolge von Filmbildern und/oder einer Tonspur, die wenigstens einen Abschnitt für eine gleichzeitige Wiedergabe aufweisen, wobei die Filmbilder in Abschnitten für die gleichzeitige Wiedergabe anhand der ermittelten Referenzen einander zugeordnet werden;
- Bilden einer Sequenz von Wiedergabebildern des Dienstes mit den Abfolgen von Filmbildern und/oder der Tonspur; und
- Bereitstellen der Sequenz von Wiedergabebildern an einer Anschlußeinrichtung zum Anschluß einer Wiedergabeeinrichtung für die Sequenz von Wiedergabebildern.

Erfindungsgemäß wird die Aufgabe ferner durch ein System zum Übertragen digitaler Filmbilddaten eines Dienstes auf einem Transportkanal zur Inanspruchnahme des Dienstes gelöst, das eine erfindungsgemäße Übertragungsvorrichtung und eine erfindungsgemäße Vorrichtung zur Inanspruchnahme des Dienstes aufweist.

Nachfolgend wird ein Ausführungsbeispiel der Erfindung anhand der Zeichnungen näher erläutert. Es zeigen:
Fig. 1 eine schematische Darstellung eines Systems zum Übertragen digitaler Filmbilddaten eines Dienstes auf einem Transportkanal zur Inanspruchnahme des Dienstes; und
Fig. 2 eine schematische Darstellung eines Übertragungskanals, auf dem ein Datentransportstrom übertragen wird.

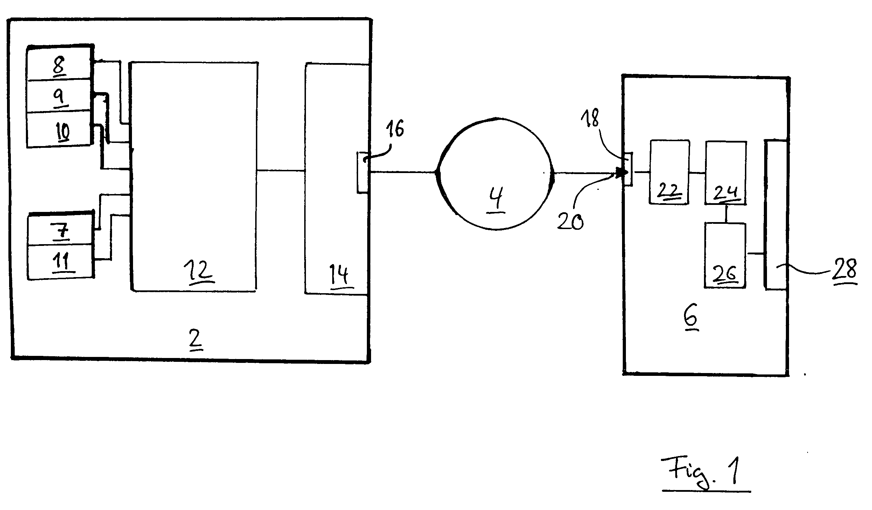

Das in Fig. 1 dargestellte System weist eine Übertragungsstation 2 zum Übertragen eines digitalen Fernsehprogrammes auf einem Kabelkanal in einem mit der Übertragungsstation 2 verbundenen Kabelnetz 4, sowie ein an das Kabelnetz 4 angeschlossenes digitales Programmdekodiergerät 6 zum Empfangen und Entschlüsseln des digitalen Fernsehprogrammes auf.

Die Übertragungsstation 2 ist mit drei Anschlüssen 8, 9, 10 ausgestattet, an die jeweils eine zugeordnete Videosignalquelle (nicht dargestellt) anschließbar ist, um der Übertragungsstation 2 während eines Systembetriebs jeweils eine Abfolge von aufgenommenen Filmbildern zuzuführen. Ferner ist die Übertragungsstation 2 mit zwei Anschlüssen 7, 11 ausgestattet, an die jeweils eine zugeordnete Audiosignalquelle (nicht dargestellt) anschließbar ist, um der Übertragungsstation 2 während eines Systembetriebs jeweils eine Tonaufnahme zuzuführen. Ferner weist die Übertragungsstation 2 eine Filmbildverarbeitungseinrichtung 12 auf, die mit den Anschlüssen 8, 9, 10 für die Videosignalquellen sowie mit den Anschlüssen 7, 11 für die Audiosignalquellen verbunden ist. Schließlich weist die Übertragungsstation 2 eine Sendeeinrichtung 14 auf, die mit der Filmbildverarbeitungseinrichtung 12 verbunden ist. Die Sendeeinrichtung 14 weist einen Ausgang 16 zum Kabelnetz 4 auf.

Das digitale Programmdekodiergerät 6 weist einen Eingang 18 für einen Kabelanschluß 20 des Kabelnetzes 4 auf. Mit dem Eingang 18 ist ein Digitalempfänger 22 verbunden, der seinerseits mit einem Entschlüsselungsmodul 24 verbunden ist. Das Entschlüsselungsmodul 24 ist mit einem Mikroprozessor 26 und einem nicht dargestellten Speicher verbunden. Außerdem ist das digitale Dekodiergerät 6 mit einem Anschluß 28 ausgestattet, an den ein Fernsehgerät (nicht dargestellt) anschließbar ist, um dem Fernsehgerät eine während des Systembetriebs gebildete Sequenz von Wiedergabebildern zuzuführen.

Nachfolgend wird der Systembetrieb gemäß dem gezeigten Ausführungsbeispiel beschrieben. Drei Kameras werden etwa zur gleichzeitigen Aufnahme eines Autorennens aus verschiedenen Positionen mit den Anschlüssen 8, 9, 10 verbunden. Jede Kamera führt der Übertragungsstation 2 jeweils eine Abfolge von Aufnahmen zu, so dass sie für eine weitere Verarbeitung bereitgestellt sind. Die bereitgestellten Aufnahmen gelangen zu der Filmbildverarbeitungseinrichtung 12. Die Filmbildverarbeitungseinrichtung 12 verarbeitet jede Abfolge von Aufnahmen zu jeweils einem digitalen Elementardatenstrom. Somit bildet die Filmbildverarbeitungseinrichtung 12 drei Elementardatenströme (Video 1, Video 2 sowie Video 3), die jeweils ausschließlich Aufnahmen von der ersten, der zweiten bzw. der dritten Kamera enthalten.

Ferner werden zwei Mikrofone mit den beiden Anschlüssen 7 und 11 verbunden. Von den Mikrofonen werden der Übertragungsstation 2 etwa ein Kommentar eines Sportreporters bzw. Streckenlärm zugeführt. Die Filmbildverarbeitungseinrichtung 12 verarbeitet die beiden bereitgestellten Tonspuren mit dem Kommentar bzw. mit dem Streckenlärm zu zwei weiteren digitalen Elementardatenströmen (Audio 1 sowie Audio 2). Insgesamt bildet die Filmverarbeitungseinrichtung 12 somit fünf Elementardatenströme (Video 1, Video 2, Video 3, Audio 1, Audio 2) und fügt diese Elementardatenströme in einen Datentransportstrom ein, der zur Übertragung auf einem Übertragungskanal 30 in dem Kabelnetz 4 vorgesehen ist.

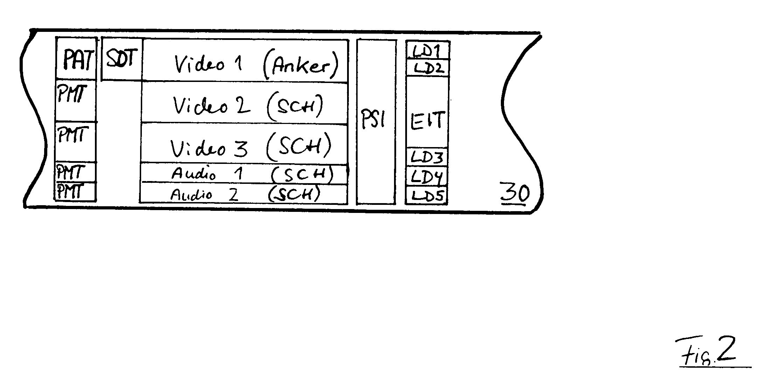

Dieser Übertragungskanal 30 mit dem Datentransportstrom ist in Fig. 2 schematisch dargestellt. Der Übertragungskanal 30 ist im Format des Digital Video Broadcasting (DVB) Standard ausgebildet, d.h. der Datentransportstrom ist wird im DVB Standard übertragen. Der übertragene Datentransportstrom weist - wie oben erläutert - fünf Elementardatenströme (Video 1, Video 2, Video 3, Audio 1, Audio 2) auf.

Einer der Elementardatenströme, vorliegend der Elementardatenstrom "Video 1", ist als Anker (Multifeed Master Service) ausgebildet und wird auf einem logischen Ankerkanal, der in den Übertragungskanal 30 eingebettet ist, im DVB Standard übertragen. Die übrigen Elementardatenströme werden jeweils auf einem zugeordneten logischen Nebenkanal (side channel - SCH) übertragen; die Nebenkanäle sind ebenfalls in den Übertragungskanal 30 eingebettet.

Der Ankerkanal ist in herkömmlicher Weise ausgebildet und weist eine Dienstbeschreibungstabelle (Service Description Table - SDT) auf, die Informationen über den Dienst (Datentransportstrom, Dienstname, Dienstart, Name des Dienstanbieters, etc.) beinhaltet. Die in die Dienstbeschreibungstabelle eingetragenen Informationen sind für den Dienstabnehmer in einer Kanalliste einsehbar.

Der Datentransportstrom weist eine programmspezifische Information (PSI) auf, die die Zusammensetzung des Datentransportstroms beschreibt. Ferner weist der Datentransportstrom eine Ereignisinformationstabelle (EIT) auf, die eine Beschreibung des übertragenen digitalen Fernsehprogrammes beinhaltet. Insbesondere enthält die Ereignisinformationstabelle Informationen über die gegenseitige Zuordnung der in den Datentransportstrom eingebetteten Nebenkanäle zur Übertragung der Elementardatenströme. Diese Informationen sind für den Dienstabnehmer kaschiert und somit nicht einsehbar. Die Ereignisinformationstabelle beinhaltet Referenzen, sogenannte Verbindungsbezeichner (linkage descriptors - LD1, LD2, LD3, LD4, LD5), anhand derer eine gegenseitige Zuordnung der mit dem Datentransportstrom übertragenen Elementardatenströme (Video 1, Video 2, Video 3, Audio 1, Audio 2) sowie eine Bindung der Elementardatenströme an Raum und Zeit festgelegt ist. Somit ist mittels der Ereignisinformationstabelle eine gegenseitige Zuordnung aller mit dem Datentransportstrom übertragenen Elementardatenströme festgelegt. Diese Festlegung garantiert, dass die übertragenen Elementardatenströme einem einzigen Fernsehprogramm zugeordnet sind. Insbesondere kann festgelegt sein, dass eine der Tonspuren, die beispielsweise mit dem Elementardatenstrom "Audio 1" übertragen wird, zwei Abfolgen von Filmbildern, die etwa mit den Elementardatenströmen "Video 1" und "Video 2" übertragen werden, zugeordnet ist.

Bei einer nicht dargestellten Ausführungsform werden die Elementardatenströme in mehreren Datentransportströmen übertragen. In diesem Fall beinhaltet die Ereignisinformationstabelle (EIT) des Ankerkanals Referenzen auf Nebenkanäle, die in den anderen Datentransportstrom eingebettet sind. Bei einer weiteren Ausführungsform öffnet die Ereignisinformationstabelle einen Nebenkanal für eine Übertragung eines Elementardatenstroms, der von den übrigen Elementardatenströmen unabhängig ist. Dieser unabhängige Elementardatenstrom kann zur Übertragung einer Einzelsendung verwendet werden.

Die Funktionsweise der Signalisierung mittels der Dienstbeschreibungstabelle und der Ereignisinformationstabelle wird am Beispiel einer Übertragung eines Fußballspiels der Bundesliga als Spiel des Tages erläutert: In der Dienstbeschreibungstabelle wird der Übertragungskanal für dieses Spiel als Ankerkanal signalisiert. Ferner wird in der Ereignisinformationstabelle ein Verweis auf dieses Spiel mittels eines Verbindungsbezeichners eingefügt. Aufgrund der Signalisierung in der Dienstbeschreibungstabelle wird das Spiel in einer Kanalliste mit Diensten angezeigt, die vom Dienstabnehmer ohne Zusatzkosten in Anspruch genommen werden können. Somit kann der Dienstabnehmer das Spiel ohne Zusatzkosten ansehen. Aufgrund der Referenzierung in der Ereignisinformationstabelle kann das Spiel vom Dienstabnehmer im Rahmen einer Simultaneinspeisung von Diensten gesondert angefordert und vom Anbieter diesem Dienstabnehmer gesondert berechnet werden.

Vorzugsweise weist die Referenz in der Ereignisinformationstabelle ein Datenfeld auf, das frei belegbar (private) ausgebildet ist und beispielsweise einen Namen des mittels der jeweiligen Referenz bezeichneten Elementardatenstroms beinhaltet.

Der Datentransportstrom weist ferner eine Programmzuordnungstabelle (Program Association Table - PAT) sowie mehrere Programmabbildungstabellen (Program Map Table - PMT) auf. Diese Tabellen dienen einer konkreten Lokalisierung der einzelnen Abfolgen von Filmbildern bzw. Tonspuren, Anwendungen oder dergleichen multimedialer Dienste. In der Programmzuordnungstabelle werden alle im Datentransportstrom enthaltenen Dienste (Audio, Video, Daten) angegeben. Die Programmzuordnungstabelle enthält einen Verweis auf die Programmabbildungstabelle, in der Kennnummern der zugehörigen Elementardatenströme für den übertragenen Dienste aufgeführt und die zugehörigen Elementardatenströme näher beschrieben werden. Die Programmzuordnungstabelle und die Programmabbildungstabellen beinhalten somit zeitunabhängige Daten über die Dienste. Dagegen beinhaltet die Ereignisinformationstabelle Daten, die von Raum und Zeit abhängig sind. Somit ist die erfindungsgemäße simultane Einspeisung der multimedialen Daten etwa von Filmbildern und/oder Tonspuren besonders einfach und sicher.

## Patentansprüche

1. Vorrichtung zum Übertragen digitaler Filmbilddaten auf einem Transportkanal (30), mit
- einem ersten Quellenanschluß (8) für eine erste Filmbildquelle zum Bereitstellen einer ersten Abfolge von Filmbildern,
- wenigstens einem zweiten Quellenanschluß (9, 10) für eine zweite Filmbildquelle zum Bereitstellen einer zweiten Abfolge von Filmbildern, die zumindest einen Abschnitt zeitlicher Überschneidung mit der ersten Abfolge von Filmbildern aufweist,
- einer Filmbildverarbeitungseinrichtung (12), die mit dem ersten Quellenanschluß (8) und dem zweiten Quellenanschluß (9, 10) verbunden ist und die zum Einfügen der Filmbilder der ersten Abfolge sowie der Filmbilder der zweiten Abfolge in einen Datentransportstrom derart ausgebildet ist, dass sie einen ersten Elementardatenstrom mit den Filmbildern der ersten Abfolge und einen zweiten Elementardatenstrom mit den Filmbildern der zweiten Abfolge erstellt und die Elementardatenströme in denselben Datentransportstrom einfügt, und
- einer Sendeeinrichtung, die mit der Filmbildverarbeitungseinrichtung verbunden ist und die zum Senden des Datentransportstroms auf dem Transportkanal vorgesehen ist,
**dadurch gekennzeichnet, daß** die Filmbildverarbeitungseinrichtung (12) Referenzen erstellt, anhand derer in Abschnitten der Abfolgen von Filmbildern, in denen sich die Abfolgen zeitlich überschneiden, die Filmbilder der zweiten Abfolge jenen der ersten Abfolge zugeordnet werden können.

2. Vorrichtung nach dem vorstehenden Anspruch,
**dadurch gekennzeichnet, dass** die Filmbildverarbeitungsvorrichtung (12) dazu vorgesehen ist, die Referenzen in den Datentransportstrom, insbesondere in jeden der Elementardatenströme einzufügen.

3. Vorrichtung nach einem der vorstehenden Ansprüche,
**dadurch gekennzeichnet, dass** wenigstens einer der Quellenanschlüsse (8, 9, 10) zum Anschluß einer digitalen Filmbildquelle vorgesehen ist.

4. Vorrichtung nach einem der vorstehenden Ansprüche,
**gekennzeichnet durch**
- wenigstens einen weiteren Quellenanschluß (7, 11) für eine Tonspurquelle zum Bereitstellen einer Tonspur, die Abschnitte zeitlicher Überschneidung mit wenigstens einer der Abfolgen von Filmbildern aufweist,
- wobei die Filmbildverarbeitungseinrichtung (12) mit dem weiteren Quellenanschluß (7, 11) verbunden ist, und
- wobei die Filmbildverarbeitungseinrichtung (12) derart ausgebildet ist, dass sie einen weiteren Elementardatenstrom mit der Tonspur erstellt und diesen weiteren Elementardatenstrom in den Datentransportstrom einfügt.

5. Vorrichtung nach einem der vorstehenden Ansprüche,
**dadurch gekennzeichnet, dass** die Filmbildverarbeitungseinrichtung (12) zum Verschlüsseln wenigstens eines Elementardatenstroms ausgebildet ist.

6. Vorrichtung zur Inanspruchnahme eines Dienstes, der mit einem Datentransportstrom auf einem Transportkanal (30) übertragen wird, mit
- einer Empfangseinrichtung (22) zum Empfangen des Datentransportstroms auf dem Transportkanal (30),
- einer Transportstromdatenverarbeitungseinrichtung (26), die mit der Empfangseinrichtung verbunden ist und die zum Verarbeiten des empfangenen Datentransportstroms zu einer Sequenz von Wiedergabebildern des Dienstes ausgebildet ist, und
- einer mit der Transportstromdatenverarbeitungseinrichtung (26) verbundenen Anschlußeinrichtung (28) zum Anschluß einer Wiedergabeeinrichtung für die Sequenz von Wiedergabebildern,
**dadurch gekennzeichnet, dass** die Transportstromdatenverarbeitungseinrichtung (26) zum Verarbeiten gleichzeitiger Filmbilder in dem Datentransportstrom derart ausgebildet ist, dass die Transportstromdatenverarbeitungseinrichtung die gleichzeitigen Filmbilder in dem Datentransportstrom anhand von Referenzen in dem Datentransportstrom bestimmt.

7. Vorrichtung nach dem vorstehenden Anspruch,
**dadurch gekennzeichnet, dass** die Transportstromdatenverarbeitungseinrichtung (26) dazu vorgesehen ist, mehrere gleichzeitige Filmbilder in ein Wiedergabebild einzufügen.

8. Vorrichtung nach einem der Ansprüche 6 oder 7,
**dadurch gekennzeichnet, dass** die Transportstromdatenverarbeitungseinrichtung (26) dazu vorgesehen ist, mehrere gleichzeitige Filmbilder für eine solche Wiedergabe zu verarbeiten, die einen räumlichen Eindruck weckt.

9. Vorrichtung nach einem der Ansprüche 6 bis 8,
**gekennzeichnet durch** eine Entschlüsselungseinrichtung (24), die zwischen die Empfangseinrichtung (22) und die Transportstromdatenverarbeitungseinrichtung (26) geschaltet ist, und die zum Entschlüsseln eines verschlüsselten Elementardatenstroms des Datentransportstroms vorgesehen ist.

10. Vorrichtung nach einem der vorstehenden Ansprüche,
**dadurch gekennzeichnet, dass** der Transportkanal (30) auf dem der Datentransportstrom gesendet wird, mehrere logische Übertragungskanäle umfaßt, die jeweils zur Übertragung eines Elementardatenstroms dienen.

11. Vorrichtung nach dem vorstehenden Anspruch,
**dadurch gekennzeichnet, dass** der Transportkanal (30) auf dem der Datentransportstrom gesendet wird, einem ersten umfaßten logischen Übertragungskanal derart zugeordnet ist, dass die Belegung der übrigen umfaßten logischen Übertragungskanäle kaschiert ist.

12. Verfahren zur Übertragung digitaler Filmbilddaten auf einem Transportkanal (30), mit den Schritten:
- Bereitstellen einer ersten Abfolge von Filmbildern an einem ersten Quellenanschluß (8) für eine erste Filmbildquelle;
- Bereitstellen einer zweiten Abfolge von Filmbildern an einem zweiten Quellenanschluß (9, 10) für eine zweite Filmbildquelle, wobei die zweite Abfolge von Filmbildern zumindest einen Abschnitt zeitlicher Überschneidung mit der ersten Abfolge von Filmbildern aufweist;
- Erstellen eines ersten Elementardatenstroms mit den Filmbildern der ersten Abfolge;
- Erstellen eines zweiten Elementardatenstroms mit den Filmbildern der zweiten Abfolge;
- Erstellen von Referenzen, anhand derer in Abschnitten der Abfolgen von Filmbildern, in denen sich die Abfolgen zeitlich überschneiden, die Filmbilder der zweiten Abfolge jenen der ersten Abfolge zugeordnet werden können,
- Einfügen des ersten Elementardatenstroms, des zweiten Elementardatenstroms sowie der Referenzen in einen Datentransportstrom; und
- Senden des Datentransportstroms auf dem Transportkanal (30).

13. Verfahren zur Inanspruchnahme eines Dienstes, der mit einem Datentransportstrom auf einem Transportkanal (30) übertragen wird, mit den Schritten:
- Empfangen des Datentransportstroms auf dem Transportkanal (30);
- Ermitteln von Elementardatenströmen, die in den Datentransportstrom eingefügt sind;
- Ermitteln von Referenzen, die in den Datenstransportstrom, insbesondere in die ermittelten Elementardatenströme eingefügt sind;
- Verarbeiten der ermittelten Elementardatenströme zu jeweils einer Abfolge von Filmbildern und/oder einer Tonspur, die wenigstens einen Abschnitt für eine gleichzeitige Wiedergabe aufweisen, wobei die Filmbilder in Abschnitten für die gleichzeitige Wiedergabe anhand der ermittelten Referenzen einander zugeordnet werden;
- Bilden einer Sequenz von Wiedergabebildern des Dienstes mit den Abfolgen von Filmbildern und/oder der Tonspur; und
- Bereitstellen der Sequenz von Wiedergabebildern an einer Anschlußeinrichtung zum Anschluß einer Wiedergabeeinrichtung für die Sequenz von Wiedergabebildern.

14. System zum Übertragen digitaler Filmbilddaten eines Dienstes auf einem Transportkanal zur Inanspruchnahme des Dienstes, mit einer Übertragungsvorrichtung nach einem der Ansprüche 1 bis 5 und/oder zur Durchführung eines Übertragungsverfahrens nach Anspruch 12, und einer Vorrichtung zur Inanspruchnahme eines Dienstes nach einem der Ansprüche 6 bis 11 und/oder zur Durchführung eines Verfahrens zur Inanspruchnahme eines Dienstes nach Anspruch 13.
